# EUROPÄISCHE PATENTSCHRIFT

(11) **EP 3 390 183 B1**
(45) Veröffentlichungstag und Bekanntmachung des Hinweises auf die Patenterteilung: **21.09.2022**
(21) Anmeldenummer: 16794212.7
(22) Anmeldetag: 09.11.2016
(51) Int. Cl.: B60T 15/04, B60T 15/18, F16K 1/06

(54) **VORRICHTUNG ZUR ERHÖHUNG DER ENTLÜFTUNGSGESCHWINDIGKEIT EINES PNEUMATISCHEN REGELVENTILS**
DEVICE FOR INCREASING THE BLEEDING RATE OF A PNEUMATIC CONTROL VALVE
DISPOSITIF PERMETTANT D'AUGMENTER LA VITESSE DE VENTILATION D'UNE VANNE DE RÉGULATION PNEUMATIQUE

(30) Priorität: 19.12.2015 DE 102015016658
(43) Veröffentlichungstag der Anmeldung: 24.10.2018
(73) Patentinhaber: ZF CV Systems Europe BV, 1170 Brussels (BE)
(72) Erfinder: BEIER, Peter, 31515 Wunstorf (DE); DREYER, Werner, 30826 Garbsen (DE); ELZE, Petra, 30455 Hannover (DE); FABIAN, Alexander, 31224 Peine (DE); HOMANN, Sven, 30900 Wedemark (DE); HÖRSTMANN, Jan, 31275 Lehrte (DE); MARTENS, Bettina, 30161 Hannover (DE); MARTINI, Gerhard, 30989 Gehrden (DE); RlEDIGER-JANISCH, Karl-Heinz, 30455 Hannover (DE)
(74) Vertreter: Rabe, Dirk-Heinrich
(86) Internationale Anmeldenummer: PCT/EP2016/001851
(87) Internationale Veröffentlichungsnummer: WO 2017/102046

(56) Entgegenhaltungen:
- EP-A1- 1 844 999
- DE-A1- 3 137 687
- US-A- 3 858 610

## Beschreibung

Die Erfindung betrifft eine Vorrichtung zur Erhöhung der Entlüftungsgeschwindigkeit eines pneumatischen Regelventils mit wenigstens einem ersten Ventilsystem mit einem axial verschiebbaren ersten Ventilkolben, der an seiner Unterseite einen am Ende eines zylindrischen Fortsatzes angeordneten, axial vorstehenden, ringförmigen Dichtsitz aufweist, der mit einer radialen Dichtfläche an einem ersten, axial verschiebbaren ringförmigen Plattenventil zusammenwirkt, wobei die radiale Dichtfläche des ersten Plattenventils des Weiteren mit einem ersten, koaxialen, ringförmigen sowie unverschiebbaren Dichtsitz größeren Durchmessers als der Dichtsitz am ersten Ventilkolben zusammenwirkt, wobei der Dichtsitz am ersten Ventilkolben in der Ruhestellung des ersten Ventilkolbens von der radialen Dichtfläche des ersten Plattenventils abgehoben ist und die radiale Dichtfläche des ersten Plattenventils am ersten, unverschiebbaren Dichtsitz anliegt, so dass eine Entlüftungsverbindung zwischen einem ersten, den zylindrischen Fortsatz des Ventilkolbens umgebenden Raum mit einem zentrischen Entlüftungsdurchlass im ersten Plattenventil besteht, während bei Betätigung des Ventilkolbens dessen ringförmiger Dichtsitz an der radialen Dichtfläche des ersten Plattenventils anliegt und dieses axial verschiebt, so dass die radiale Dichtfläche des ersten Plattenventils vom ersten, unverschiebbaren Dichtsitz abgehoben ist, wodurch eine pneumatische Verbindung zwischen dem ersten, dem zylindrischen Fortsatz des ersten Ventilkolbens umgebenden Raum und einem zweiten, das erste Plattenventil umgebenden Raum besteht.

Eine derartige Vorrichtung in einem als Relaisventil ausgebildeten Regelventil ist in der EP 1 844 999 B1 derselben Anmelderin offenbart. Dieses bekannte Relaisventil hat sich bewährt, es ist jedoch hinsichtlich der Entlüftungsgeschwindigkeit durch die Entlüftungsverbindung verbesserungsfähig. Dies insbesondere hinsichtlich einer in dieser Druckschrift dargestellten und beschriebenen Ausführungsform, die eine axiale Verlängerung eines zylindrischen Fortsatzes in Form eines in ein ringförmiges Plattenventil ragenden Rohres aufweist, welches eine ringförmige Entlüftungsverbindung bildet und das zur Entlüftung eines zentrisch geführten Redundanzdruckes dient. Hierdurch wird der Durchlassquerschnitt der Entlüftungsverbindung eingeengt und es ist aufgrund einer Zerklüftung des Bereichs zwischen dem ringförmigen Dichtsitz am zylindrischen Fortsatz und der rohrförmigen Verlängerung eine nicht optimale Führung des Entlüftungsluftstroms gegeben, der die Entlüftungsgeschwindigkeit nachteilig herabsetzt.

Vor diesem Hintergrund liegt der Erfindung die Aufgabe zugrunde, eine Anordnung in einem pneumatischen Regelventil vorzuschlagen, die es ermöglicht, die Entlüftungsgeschwindigkeit auf einfache Weise zu erhöhen, ohne dass damit ein erhöhter Bauaufwand hinsichtlich Bauraum und Herstellkosten verbunden ist.

Ausgehend von dieser Aufgabenstellung wird eine Vorrichtung zur Erhöhung der Entlüftungsgeschwindigkeit eines pneumatischen Regelventils mit wenigstens einem ersten Ventilsystem mit einem axial verschiebbaren ersten Ventilkolben vorgestellt, bei welcher der erste Ventilkolben an seiner Unterseite einen am Ende eines zylindrischen Fortsatzes angeordneten, axial vorstehenden, ringförmigen Dichtsitz aufweist, der mit einer radialen Dichtfläche an einem ersten, axial verschiebbaren ringförmigen Plattenventil zusammenwirkt, wobei die radiale Dichtfläche des ersten Plattenventils des Weiteren mit einem ersten, koaxialen, ringförmigen sowie unverschiebbaren Dichtsitz größeren Durchmessers als der Dichtsitz am ersten Ventilkolben zusammenwirkt, wobei der Dichtsitz am ersten Ventilkolben in der Ruhestellung des ersten Ventilkolbens von der radialen Dichtfläche des ersten Plattenventils abgehoben ist und die radiale Dichtfläche des ersten Plattenventils am ersten, unverschiebbaren Dichtsitz anliegt, so dass eine Entlüftungsverbindung zwischen einem ersten, den zylindrischen Fortsatz des Ventilkolbens umgebenden Raum mit einem zentrischen Entlüftungsdurchlass im ersten Plattenventil besteht, während bei Betätigung des Ventilkolbens dessen ringförmiger Dichtsitz an der radialen Dichtfläche des ersten Plattenventils anliegt und dieses axial verschiebt, so dass die radiale Dichtfläche des ersten Plattenventils vom ersten, unverschiebbaren Dichtsitz abgehoben ist, wodurch eine pneumatische Verbindung zwischen dem ersten, dem zylindrischen Fortsatz des ersten Ventilkolbens umgebenden Raum und einem zweiten, das erste Plattenventil umgebenden Raum besteht.

Zur Lösung der gestellten Aufgabe ist vorgesehen, dass koaxial zum axial vorstehenden, ringförmigen Dichtsitz am zylindrischen Fortsatz des ersten Ventilkolbens ein in den zentrischen Entlüftungsdurchlass des ersten Plattenventils ragender konischer Zapfen angeordnet ist, dass ein dadurch zwischen dem ringförmigen Dichtsitz und dem Zapfen gebildeter Ringraum strömungsgünstig gestaltete, abgerundete Übergänge vom ringförmigen Dichtsitz zum Ringraum und vom Ringraum zum konischen Zapfen aufweist, und dass der Zapfen aufgrund seines in Abströmrichtung geringer werdenden Durchmessers so ausgebildet ist, dass er den Querschnitt des Entlüftungsdurchlasses nur wenig einschränkt und eine strömungsgünstige Führung eines in dem Entlüftungsdurchlass geführten Entlüftungsluftstroms bewirkt.

Im konischen Zapfen kann eine Verbindungsbohrung vom Entlüftungsdurchlass zur Oberseite des ersten Ventilkolbens ausgebildet sein, welche den Raum im Regelventil oberhalb des ersten Ventilkolbens ständig mit dem Entlüftungsdurchlass verbindet.

Zur weiteren Verminderung des Strömungswiderstandes kann außerdem vorgesehen sein, dass eine zum ersten, den zylindrischen Fortsatz des ersten Ventilkolbens umgebenden Raum führende Oberfläche des ersten, unverschiebbaren Dichtsitzes strömungsgünstig abgeschrägt oder abgerundet ausgebildet ist.

Das pneumatische Regelventil kann das erste Ventilsystem und ein zweites, zum ersten Ventilsystem koaxial und axial beabstandet angeordnetes zweites Ventilsystem aufweisen, wobei das zweite Ventilsystem einen pneumatisch durch Betätigung des ersten Ventilkolbens des ersten Ventilsystems axial abgedichtet verschiebbaren zweiten Ventilkolben aufweist, und bei dem an dem zweiten Ventilsystem ein abgedichtet durch das erste Plattenventil des ersten Ventilsystems geführtes, mit einer Endfläche an einem Ende bis in den Bereich des zwischen dem ringförmigen Dichtsitz und dem Zapfen des ersten Ventilsystems gebildeten Ringraum ragendes erstes Rohr angeordnet ist, das radial innen den Entlüftungsdurchlass für das erste Ventilsystem bildet

Weiter kann zur Optimierung der Strömungsverhältnisse vorgesehen sein, dass die Endfläche des in den Ringraum ragenden Endes des Rohres des zweiten Ventilkolbens strömungsgünstig abgerundet oder abgeschrägt ausgebildet ist.

Gemäß einer anderen Weiterbildung der Erfindung kann vorgesehen sein, dass das zweite Ventilsystem analog zum ersten Ventilsystem den zweiten Ventilkolben mit einem an seiner Unterseite am freien Ende eines zylindrischen Fortsatzes angeordneten, axial vorstehenden, ringförmigen Dichtsitz sowie ein zweites axial verschiebbares, ringförmiges Plattenventil aufweist, wobei der ringförmige Dichtsitz mit einer radialen Dichtfläche des zweiten Plattenventils zusammenwirkt und diese radiale Dichtfläche des Weiteren mit einem zweiten, koaxialen, ringförmigen, unverschiebbaren Dichtsitz größeren Durchmessers als der Durchmesser des Dichtsitzes am zweiten Ventilkolben zusammenwirkt, dass an einer Unterseite des zweiten Ventilkolbens ein in einen zentrischen Entlüftungsdurchlass im zweiten Plattenventil ragendes zweites Rohr angeordnet ist, das zusammen mit dem ersten Rohr am zweiten Ventilkolben den Entlüftungsdurchlass für das erste Ventilsystem bildet, dass ein zwischen dem zweiten Rohr und dem zweiten ringförmigen Plattenventil gebildeter Ringraum einen Entlüftungsdurchlass für das zweite Ventilsystem bildet, der am freien Ende des zweiten Rohres in einen gemeinsamen rohrförmigen Entlüftungsdurchlass für das erste und das zweite Ventilsystem übergeht, und dass zwischen dem ringförmigen Dichtsitz und dem zweiten Rohr strömungsgünstig gestaltete, abgerundete Übergänge ausgebildet sind, die eine strömungsgünstige Führung des Entlüftungsluftstroms durch das zweite Ventilsystem bewirken.

Vorteilhafterweise können das erste Rohr und das zweite Rohr materialeinheitlich und einstückig mit dem zweiten Ventilkolben hergestellt sein.

Die erfindungsgemäße Aufgabe wird des Weiteren gelöst durch die Verwendung der vorstehend definierten Vorrichtung in einem als Bremswertgeber oder als Relaisventil ausgebildeten Regelventil für ein Einkreis- oder Zweikreis-Druckluftbremssystem eines Fahrzeugs zum Ausregeln eines einer gewünschten Bremswirkung entsprechenden Bremsdrucks, wobei das als Bremswertgeber oder als Relaisventil ausgebildete Regelventil wenigstens ein erstes pneumatisches Ventilsystem umfasst und wenigstens im Bereich eines Entlüftungsdurchlasses des wenigstens ersten pneumatischen Ventilsystems die erfindungsgemäße Vorrichtung zur strömungsgünstigen Führung des Entlüftungsluftstroms angeordnet ist.

US 3 858 610 A offenbart ein Relaisventil zur Nutzung in einer Fahrzeugluftbremse. Das genannte Relaisventil umfasst einen verschiebbaren Relaiskolben und einen verschiebbaren Kolben. Der verschiebbare Kolben steuert den Luftdruck zwischen dem Versorgungsanschluss, dem Lieferanschluss und der Abluftöffnung.

Bremswertgeber und Relaisventile sind in Kraftfahrzeugen mit Drucklufteinrichtungen, insbesondere in Druckluftbremsanlagen von Lastkraftwagen, angeordnet und allgemein bekannt. Ein entsprechendes Relaisventil ist in der eingangs schon erwähnten EP 1 844 999 B1 dargestellt und beschrieben, während ein als Steuerventil bezeichneter Bremswertgeber aus der DE 33 43 172 A1 bekannt ist. Die konstruktive Gestaltung und die Funktion eines Bremswertgebers oder eines Relaisventils sind nicht Gegenstand der vorliegenden Erfindung und sind daher nur hinsichtlich der zum Verständnis der vorliegenden Erfindung notwendigen Einzelheiten beschrieben.

Die Erfindung wird nachstehend anhand zweier in der beigefügten Zeichnung dargestellter Ausführungsbeispiele weiter erläutert. In der Zeichnung zeigt
Fig. 1 eine Längsschnittdarstellung eines Bremswertgebers, der mit der erfindungsgemäßen Vorrichtung zur Erhöhung der Entlüftungsgeschwindigkeit ausgestattet ist,
Fig. 2 eine vergrößerte Längsschnittdarstellung des strömungsgünstig gestalteten Bereichs zwischen dem ringförmigen Dichtsitz am Ventilkolben und der radialen Dichtfläche an einem Plattenventil, und
Fig. 3 eine perspektivische Längsschnittdarstellung einer zweiten Ausführungsform der Vorrichtung gemäß Fig. 1.

Ein als Bremswertgeber für ein Zweikreis-Bremssystem eines Kraftfahrzeugs ausgebildetes Regelventil 1 weist ein Gehäuse 2 auf, in dem ein erster Ventilkolben 3 abgedichtet geführt ist. Ein Stößelkolben 8 ist in einer hohlzylindrischen Führung 7 an einem Gehäusedeckel 6 axial verschiebbar geführt. Der Gehäusedeckel 6 ist zusammen mit der Führung 7 mittels Befestigungsschrauben 9 am Gehäuse 2 verschraubt. Unterhalb einer Unterseite 11 des ersten Ventilkolbens 3 ist ein erstes Ventilsystem 10 angeordnet, welches den ersten Ventilkolben 3 mit einem zylindrischen Fortsatz 12 und einem an dessen freien Ende angeordneten ringförmigen Dichtsitz 13, ein erstes ringförmiges Plattenventil 14 mit einer radialen Dichtfläche 15 und einen ersten, unverschiebbaren, ringförmigen Dichtsitz 16 größeren Durchmessers als der ringförmige Dichtsitz 13 am zylindrischen Fortsatz 12 des ersten Ventilkolbens 3 umfasst.

Der zylindrische Fortsatz 12 am ersten Ventilkolben 3 und der erste, unverschiebbare, ringförmige Dichtsitz 16 sind von einem, radial äußeren ersten Raum 17 im Gehäuse 2 umgeben, während das ringförmige Plattenventil 14 von einem zweiten, radial inneren Raum 19 im Gehäuse 2 umgeben ist.

Der erste Ventilkolben 3 lässt sich durch den Stößelkolben 8 über eine Druckplatte 5 und gegen die Rückstellkraft eine ersten Druckfeder 4 bei Betätigung durch ein nicht dargestelltes Bremspedal axial verschieben, wobei die Federkraft der ersten Druckfeder 4 erheblich größer ist als die Federkraft einer auf die Unterseite 11 des ersten Ventilkolbens 3 wirkenden Gegendruckfeder 20. Die Druckplatte 5 ist mittels einer zentrisch angeordneten Schraube 51 mit einer axial verschiebbaren Einstellscheibe 53 verbunden, wobei sich die erste Druckfeder 4 mit ihrem stößelkolbenfernen Ende auf die Oberseite dieser Einstellscheibe 53 abstützt.

Das erste ringförmige Plattenventil 14 ist axial gegen die Kraft einer zweiten Druckfeder 21 durch den ersten Ventilkolben 3 verschiebbar, wenn der ringförmige Dichtsitz 13 am zylindrischen Fortsatz 12 des ersten Ventilkolbens 3 auf der radialen Dichtfläche 15 des ersten ringförmigen Plattenventils 14 auftrifft. Am zylindrischen Fortsatz 12 des ersten Ventilkolbens 3 ist ein konischer Zapfen 22 ausgebildet, der in einen zentrischen Entlüftungsdurchlass 18 des ersten ringförmigen Plattenventils 14 hineinragt.

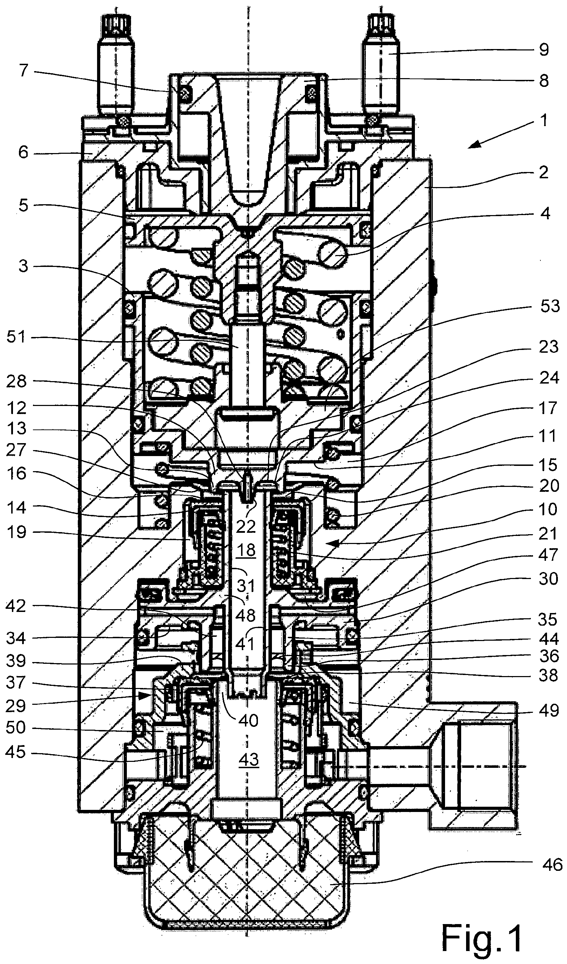

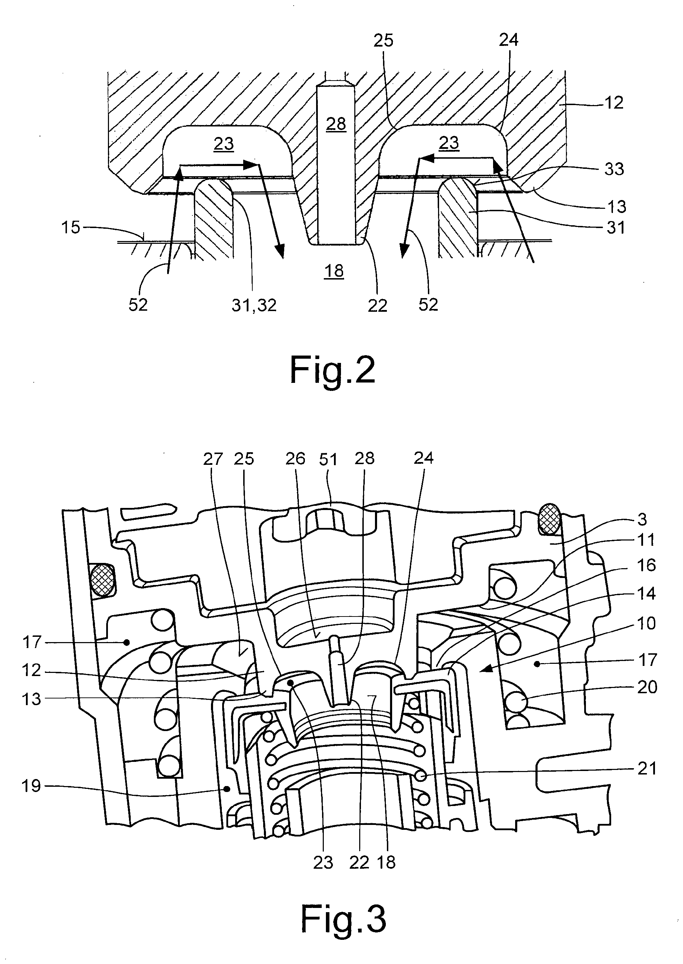

Aus Fig. 2 ist ersichtlich, dass ein zwischen dem ersten ringförmigen Dichtsitz 13 am zylindrischen Fortsatz 12 des ersten Ventilkolbens 3 und dem konischen Zapfen 22 gebildeter Ringraum 23 besonders strömungsgünstig gestaltet ist, indem ein Übergang 24 vom ersten ringförmigen Dichtsitz 13 kommend und ein Übergang 25 zum konischen Zapfen 22 hin führend mit großen Radien abgerundet ausgebildet sind. Des Weiteren ist eine Endfläche 33 eines bis in den Bereich des Ringraums 23 ragendes freien Ende 32 eines ersten Rohres 31 abgerundet oder abgeschrägt, ebenso der ringförmige Dichtsitz 13 am zylindrischen Fortsatz 12. Durch diese Konstruktion weist der genannte Bereich des ersten ringförmigen Plattenventils 14 am zentrischen Entlüftungsdurchlass 18 einen im Vergleich zu bekannten Regelventile verringerten Strömungswiderstand auf, welches zu einer Erhöhung der Entlüftungsgeschwindigkeit vom ersten, radial äußeren Raum 17 hin zum Entlüftungsdurchlass 18 führt. Wie Fig. 1 ersichtlich ist zusätzlich eine zum ersten, den zylindrischen Fortsatz 12 des ersten Ventilkolbens 3 umgebenden radial äußeren Raum 17 führende Oberfläche 27 des ersten, unverschiebbaren Dichtsitzes 16 strömungsgünstig abgeschrägt oder abgerundet ausgebildet.

Koaxial und axial beabstandet zum ersten Ventilsystem 10 ist ein zweites Ventilsystem 29 angeordnet, das sich pneumatisch durch das erste Ventilsystem 10 betätigen lässt. Das zweite Ventilsystem 29 umfasst einen zweiten Ventilkolben 30, aus dessen Oberseite 48 das erste Rohr 31 axial herausragt und durch das ringförmige Plattenventil 14 des ersten Ventilsystems 10 hindurch bis in den Bereich des Ringraums 23 geführt ist (Fig. 1, Fig. 2).

An einer Unterseite 34 des zweiten Ventilkolbens 30 ist ein hohlzylindrischer Fortsatz 35 mit einem ringförmigen Dichtsitz 36 sowie radial innerhalb dieses Fortsatzes 35 und konzentrisch dazu ein zweites Rohr 41 angeordnet, wobei radial zwischen diesem Fortsatz 35 und dem zweiten Rohr 41 ein Ringraum 42 ausgebildet ist.

Das erste Rohr 31 und das zweite Rohr 41 am können in den zweiten Ventilkolben 30 unverlierbar eingesetzt sein oder mit diesem, wie dargestellt, materialeinheitlich und einstückig hergestellt sein.

Der zwischen dem zweiten Rohr 41 und einem zweiten ringförmigen Plattenventil 37 vorhandene Ringraum 42 bildet einen Entlüftungsdurchlass für das zweite Ventilsystem 29, der am Ende des zweiten Rohres 41 über einen ringförmigen Entlüftungsdurchlass 40 im zweiten ringförmigen Plattenventil 37 in einen gemeinsamen Entlüftungsdurchlass 43 für das erste Ventilsystem 10 und das zweite Ventilsystem 29 übergeht. Der gemeinsame Entlüftungsdurchlass 43 mündet in einen Schalldämpfer 46, durch die Druckluft den bei einem Entlüftungsvorgang in die Umgebungsluft gelangen kann.

Somit ist das zweite Ventilsystem 29 analog zum ersten Ventilsystem 10 aufgebaut und umfasst abgerundete Übergänge 44 zwischen dem ringförmigen Dichtsitz 36 am zylindrischen Fortsatz 35 des zweiten Ventilkolbens 30 und einer Radialdichtfläche 38 des zweiten ringförmigen Plattenventils 37. Auch der ringförmige Dichtsitz 36 am zylindrischen Fortsatz 35 des zweiten Ventilkolbens 30 und der zweite, unverschiebbare Dichtsitz 39 können abgerundet ausgebildet oder mit Schrägflächen versehen sein, um strömungsgünstige Durchflussverhältnisse zu gewährleisten.

Das zweite ringförmige Plattenventil 37 ist durch eine dritte Druckfeder 45 mit einer Rückstellkraft beaufschlagt, welche die radiale Dichtfläche 38 des zweiten ringförmigen Plattenventils 37 in der in den Figuren 1 und 3 gezeigten Stellung gegen den zweiten unverschiebbaren Dichtsitz 39 drückt und auch den zweiten Ventilkolben 30 in die in Fig. 1 gezeigte Stellung verschiebt.

In der in den Figuren 1 bis 3 gezeigten Stellung sind der ringförmige Dichtsitz 13 am zylindrischen Fortsatz 12 des ersten Ventilkolbens 3 und der ringförmige Dichtsitz 36 am zylindrischen Fortsatz 35 des zweiten Ventilkolbens 30 von der radialen Dichtfläche 15 des ersten ringförmigen Plattenventils 14 beziehungsweise von der radialen Dichtfläche 38 des zweiten ringförmigen Plattenventils 37 abgehoben, so dass eine Strömungsverbindung zwischen dem ersten, radial äußeren Raum 17 und dem zentrischen Entlüftungsdurchlass 18 des ersten Ventilsystems 10 sowie eine Strömungsverbindung zwischen einem Ringraum 49 zwischen dem Gehäuse 2 und dem zweiten Ventilsystem 29 zum Entlüftungsdurchlass 40 sowie von dort zum gemeinsamen Entlüftungsdurchlass 43 besteht.

Wird der erste Ventilkolben 3 durch den Stößelkolben 8 axial verschoben, und trifft der ringförmige Dichtsitz 13 am zylindrischen Fortsatz 12 des ersten Ventilkolbens 3 auf die radiale Dichtfläche 15 des ersten ringförmigen Plattenventils 14, so wird zunächst die Entlüftungsverbindung zum Entlüftungsdurchlass 18 abgesperrt. Bei einer weiteren axialen Bewegung des ersten Ventilkolbens 3 durch den Stößelkolben 8 wird das erste ringförmige Plattenventil 14 axial verschoben und vom ersten unverschiebbaren ringförmigen Dichtsitz 16 abgehoben. Dadurch ist eine Verbindung vom zweiten, radial inneren Raum 19 hin zum ersten, radial äußeren Raum 17 geöffnet, so dass Druckluft aus dem zweiten Raum 19 in den ersten Raum 17 sowie in einen Ringraum 47 oberhalb des zweiten Ventilkolbens 30 strömen kann. Die Druckluft im Ringraum 47 verschiebt den zweiten Ventilkolben 30 in ähnlicher Weise, wie der erste Ventilkolben 3 durch den Stößelkolben 8 verschoben wird. In dessen Folge setzt der ringförmige Dichtsitz 36 am zylindrischen Fortsatz 35 des zweiten Ventilkolbens 30 auf die radiale Dichtfläche 38 des zweiten ringförmigen Plattenventils 37 auf, verschließt die Verbindung von einem Ringraum 49 zum Entlüftungsdurchlass 40 und bewirkt bei einem weiteren Verschieben das Abheben der radialen Dichtfläche 38 des zweiten ringförmigen Plattenventils 37 vom zweiten, unverschiebbaren Dichtsitz 39, so dass Druckluft aus einem das zweite ringförmige Plattenventil 37 umgebenden Ringraum 50 zum Ringraum 49 gelangt und von dort zu einem zweiten, nicht dargestellten Bremskreis.

Wird der erste Ventilkolben 3 wieder in die in Fig. 1 dargestellte Stellung durch Entlastung des Stößelkolbens 8 zurückgeführt, gelangen das erste Ventilsystem 10 sowie das zweite Ventilsystem 29 wieder in die in Figuren 1 bis 3 dargestellte Stellung, so dass der erste, radial äußere Raum 17 im Bereich des ersten Ventilsystems 10 und der Ringraum 49 im Bereich des zweiten Ventilsystems 29 in der bereits beschriebenen Weise entlüftet werden, und als Folge davon die von dem ersten Ventilsystem 10 und dem zweiten Ventilsystem 29 angesteuerte Bremskreise in die gelöste Ruhestellung zurückkehren.

Das in Fig. 1 als Bremswertgeber dargestellte pneumatische Regelventil dient in bekannter Weise zur Ansteuerung eines Zweikreis-Bremssystems. Für ein Einkreis-Bremssystem ist das zweite Ventilsystem 29 nicht erforderlich; Einkreis-Bremssysteme werden aber in modernen Kraftfahrzeugen nicht mehr verwendet.

Das aus der EP 1 844 999 B1 entnehmbare Relaisventil wird in Lastkraftwagen eingesetzt, welches mit einem geringen Luftdruck hohe Luftdrücke, zum Beispiel in den Bremsen steuert.

Bremswertgeber und Relaisventile werden beim Betrieb des Kraftfahrzeugs regelmäßig belüftet sowie entlüftet und sind vorzugsweise mit der erfindungsgemäßen Vorrichtung zur Erhöhung der Entlüftungsgeschwindigkeit ausgestattet.

### Bezugszeichenliste

- 1: Regelventil
- 2: Gehäuse
- 3: Erster Ventilkolben
- 4: Erste Druckfeder
- 5: Druckplatte
- 6: Gehäusedeckel
- 7: Führung
- 8: Stößelkolben
- 9: Befestigungsschrauben
- 10: Erstes Ventilsystem
- 11: Unterseite des ersten Ventilkolbens
- 12: Zylindrischer Fortsatz
- 13: Ringförmiger Dichtsitz am Fortsatz 12 des ersten Ventilkolbens 3
- 14: Erstes, ringförmiges Plattenventil
- 15: Radiale Dichtfläche
- 16: Erster, unverschiebbarer Dichtsitz
- 17: Erster, radial äußerer Raum
- 18: Entlüftungsdurchlass
- 19: Zweiter, radial innerer Raum
- 20: Gegendruckfeder
- 21: Zweite Druckfeder
- 22: Konischer Zapfen
- 23: Ringraum
- 24: Abgerundeter Übergang
- 25: Abgerundeter Übergang
- 26: Oberseite des ersten Ventilkolbens
- 27: Oberfläche des Dichtsitzes
- 28: Verbindungsbohrung
- 29: Zweites Ventilsystem
- 30: Zweiter Ventilkolben
- 31: Erstes Rohr
- 32: Ende des ersten Rohres
- 33: Endfläche des Endes des ersten Rohres
- 34: Unterseite des zweiten Ventilkolbens
- 35: Zylindrischer Fortsatz
- 36: Ringförmiger Dichtsitz am Fortsatz 35 des zweiten Ventilkolbens 30
- 37: Zweites, ringförmiges Plattenventil
- 38: Radiale Dichtfläche
- 39: Zweiter, unverschiebbarer Dichtsitz
- 40: Entlüftungsdurchlass
- 41: Zweites Rohr
- 42: Ringraum
- 43: Gemeinsamer Entlüftungsdurchlass
- 44: Abgerundete Übergänge
- 45: Dritte Druckfeder
- 46: Schalldämpfer
- 47: Ringraum
- 48: Oberseite des zweiten Ventilkolbens
- 49: Ringraum
- 50: Ringraum
- 51: Schraube
- 52: Entlüftungsluftstrom
- 53: Einstellscheibe

## Patentansprüche

1. Vorrichtung zur Erhöhung der Entlüftungsgeschwindigkeit eines pneumatischen Regelventils (1) mit wenigstens einem ersten Ventilsystem (10) mit einem axial verschiebbaren ersten Ventilkolben (3), der an seiner Unterseite (11) einen am Ende eines zylindrischen Fortsatzes (12) angeordneten, axial vorstehenden, ringförmigen Dichtsitz (13) aufweist, der mit einer radialen Dichtfläche (15) an einem ersten, axial verschiebbaren ringförmigen Plattenventil (14) zusammenwirkt, wobei die radiale Dichtfläche (15) des ersten Plattenventils (14) des Weiteren mit einem ersten, koaxialen, ringförmigen sowie unverschiebbaren Dichtsitz (16) größeren Durchmessers als der Dichtsitz (13) am ersten Ventilkolben (3) zusammenwirkt, wobei der Dichtsitz (13) am ersten Ventilkolben (3) in der Ruhestellung des ersten Ventilkolbens (3) von der radialen Dichtfläche (15) des ersten Plattenventils (14) abgehoben ist und die radiale Dichtfläche (15) des ersten Plattenventils (14) am ersten, unverschiebbaren Dichtsitz (16) anliegt, so dass eine Entlüftungsverbindung zwischen einem ersten, den zylindrischen Fortsatz (12) des Ventilkolbens (3) umgebenden Raum (17) mit einem zentrischen Entlüftungsdurchlass (18) im ersten Plattenventil (14) besteht, während bei Betätigung des Ventilkolbens (3) dessen ringförmiger Dichtsitz (13) an der radialen Dichtfläche (15) des ersten Plattenventils (14) anliegt und dieses axial verschiebt, so dass die radiale Dichtfläche (15) des ersten Plattenventils (14) vom ersten, unverschiebbaren Dichtsitz (16) abgehoben ist, wodurch eine pneumatische Verbindung zwischen dem ersten, dem zylindrischen Fortsatz (12) des ersten Ventilkolbens (3) umgebenden Raum (17) und einem zweiten, das erste Plattenventil (14) umgebenden Raum (19) besteht, **dadurch gekennzeichnet, dass** koaxial zum axial vorstehenden, ringförmigen Dichtsitz (13) am zylindrischen Fortsatz (12) des ersten Ventilkolbens (3) ein in den zentrischen Entlüftungsdurchlass (18) des ersten Plattenventils (14) ragender, konischer Zapfen (22) angeordnet ist, dass ein dadurch zwischen dem ringförmigen Dichtsitz (13) und dem Zapfen (22) gebildeter Ringraum (23) strömungsgünstig gestaltete, abgerundete Übergänge (24, 25) vom ringförmigen Dichtsitz (13) zum Ringraum (23) und vom Ringraum (23) zum konischen Zapfen (22) aufweist, und dass der Zapfen (22) aufgrund seines in Abströmrichtung geringer werdenden Durchmessers so ausgebildet ist, dass er den Querschnitt des Entlüftungsdurchlasses (18) nur wenig einschränkt und eine strömungsgünstige Führung eines in dem Entlüftungsdurchlass (18) geführten Entlüftungsluftstroms (52) bewirkt.

2. Vorrichtung nach Anspruch 1, **dadurch gekennzeichnet, dass** im konischen Zapfen (22) eine Verbindungsbohrung (28) ausgebildet ist, welche den Entlüftungsdurchlass (18) mit der Oberseite (26) des ersten Ventilkolbens (3) verbindet.

3. Vorrichtung nach Anspruch 1 oder 2, **dadurch gekennzeichnet, dass** eine zum ersten, den zylindrischen Fortsatz (12) des ersten Ventilkolbens (3) umgebenden Raum (17) führende Oberfläche (27) des ersten, unverschiebbaren Dichtsitzes (16) strömungsgünstig abgeschrägt oder abgerundet ausgebildet ist.

4. Vorrichtung nach einem der Ansprüche 1 bis 3, **dadurch gekennzeichnet, dass** das pneumatische Regelventil (1) das erste Ventilsystem (10) und ein zweites, zum ersten Ventilsystem (10) koaxial angeordnetes sowie axial beabstandetes zweites Ventilsystem (29) aufweist, welches einen pneumatisch durch Betätigung des ersten Ventilkolbens (3) des ersten Ventilsystems (10) axial abgedichtet verschiebbaren zweiten Ventilkolben (30) aufweist, und dass an dem zweiten Ventilsystem (29) ein abgedichtet durch das erste Plattenventil (14) des ersten Ventilsystems (10) geführtes, mit einer Endfläche (33) an einem Ende (32) bis in den Bereich des zwischen dem ringförmigen Dichtsitz (13) und dem Zapfen (22) des ersten Ventilsystems (10) gebildeten Ringraum (23) ragendes erstes Rohr (31) angeordnet ist, das radial innen den Entlüftungsdurchlass (18) für das erste Ventilsystem (10) bildet.

5. Vorrichtung nach Anspruch 4, **dadurch gekennzeichnet, dass** die Endfläche (33) des in den Ringraum (23) ragenden Endes (32) des Rohres (31) des zweiten Ventilkolbens (30) strömungsgünstig abgerundet oder abgeschrägt ausgebildet ist.

6. Vorrichtung nach Anspruch 4 oder 5, **dadurch gekennzeichnet, dass** das zweite Ventilsystem (29) analog zum ersten Ventilsystem (10) den zweiten Ventilkolben (30) mit einem an seiner Unterseite (34) am freien Ende eines zylindrischen Fortsatzes (35) angeordneten, axial vorstehenden, ringförmigen Dichtsitz (36) und ein zweites axial verschiebbares, ringförmiges Plattenventil (37) aufweist, der ringförmige Dichtsitz (36) mit einer radialen Dichtfläche (38) des zweiten Plattenventils (37) zusammenwirkt und diese radiale Dichtfläche (38) des Weiteren mit einem zweiten, koaxialen, ringförmigen, unverschiebbaren Dichtsitz (3) größeren Durchmessers als der Dichtsitz (36) am zweiten Ventilkolben (30) zusammenwirkt, dass an einer Unterseite (34) des zweiten Ventilkolbens (30) ein in einen zentrischen Entlüftungsdurchlass (40) im zweiten Plattenventil (37) ragendes zweites Rohr (41) angeordnet ist, das zusammen mit dem ersten Rohr (31) am zweiten Ventilkolben (30) den Entlüftungsdurchlass (18) für das erste Ventilsystem (10) bildet, dass ein zwischen dem zweiten Rohr (41) und dem zweiten ringförmigen Plattenventil (37) gebildeter Ringraum (42) einen Entlüftungsdurchlass für das zweite Ventilsystem (29) bildet, der am freien Ende des zweiten Rohres (41) in einen gemeinsamen, rohrförmigen Entlüftungsdurchlass (43) für das erste und das zweite Ventilsystem (10, 29) übergeht, und dass zwischen dem ringförmigen Dichtsitz (36) und dem zweiten Rohr (41) strömungsgünstig gestaltete, abgerundete Übergänge (44) ausgebildet sind, die eine strömungsgünstige Führung des Entlüftungsluftstroms (52) durch das zweite Ventilsystem (29) bewirken.

7. Vorrichtung nach Anspruch 6, **dadurch gekennzeichnet, dass** das erste Rohr (31) und das zweite Rohr (41) materialeinheitlich und einstückig mit dem zweiten Ventilkoben (30) hergestellt sind.

8. Verwendung der Vorrichtung gemäß einem der Ansprüche 1 bis 7 in einem als Bremswertgeber oder als Relaisventils ausgebildeten Regelventil (1) für ein Einkreis- oder Zweikreis-Druckluftbremssystem eines Fahrzeugs zum Ausregeln eines einer gewünschten Bremswirkung entsprechenden Bremsdrucks, wobei das Regelventil (1) wenigstens ein erstes pneumatisches Ventilsystem (10) gemäß dem Oberbegriff des Anspruchs 1 umfasst und wenigstens im Bereich eines Entlüftungsdurchlasses (18) des wenigstens ersten pneumatischen Ventilsystem (10) die erfindungsgemäße Vorrichtung zur strömungsgünstigen Führung eines Entlüftungsluftstroms (52) angeordnet ist.

## Claims

1. A device for increasing the bleeding rate of a pneumatic control valve (1) having at least a first valve system (10) with an axially displaceable first valve piston (3), which comprises on its underside (11) an axially protruding, annular sealing seat (13) arranged on the end of a cylindrical projection (12), which interacts with a radial sealing surface (15) on a first, axially displaceable annular plate valve (14), wherein the radial sealing surface (15) of the first plate valve (14) additionally interacts with a first, coaxial, annular and non-displaceable sealing seat (16) of a greater diameter than the sealing seat (13) on the first valve piston (3), wherein, in the resting position of the first valve piston (3) the sealing seat (13) on the first valve piston (3) is lifted from the radial sealing surface (15) of the first plate valve (14) and the radial sealing surface (15) of the plate valve (14) abuts on the first, non-displaceable sealing seat (16), so that a bleed connection exists between a first space (17) surrounding the cylindrical projection (12) of the valve piston (3) having a central bleeding passage (18) in the first plate valve (14), during which in the event of actuation of the valve piston (3) its annular sealing seat (13) abuts on the radial sealing surface (15) of the first plate valve (14) and axially displaces it, so that the radial sealing surface (15) of the first plate valve (14) is lifted from the first, non-displaceable sealing seat (16), whereby a pneumatic connection exists between the first space (17) surrounding the cylindrical projection (12) of the first valve piston (3) and a second space (19) surrounding the first plate valve (14), **characterized in that** a tapered journal (22) protruding into the central bleeding passage (18) of the first plate valve (14) is arranged coaxially to the axially protruding, annular sealing seat (13) on the cylindrical projection (12) of the first valve piston (3), that an annular space (23) formed thereby between the annular sealing seat (13) and the journal (22) comprises flow-optimized, rounded transitions (24, 25) from the annular sealing seat (13) to the annular space (23) and from the annular space (23) to the tapered journal (22), and that, due to its diameter decreasing in the direction of outflow, the journal (22) is configured such that it restricts the cross-section of the bleeding passage (18) only minimally and causes a flow-optimized conduction of a bleeding air stream (52) conducted in the bleeding passage (18).

2. The device according to claim 1, **characterized in that** a connection borehole (28) is formed in the tapered journal (22), which connects the bleeding passage (18) to the topside (26) of the first valve piston (3).

3. The device according to claim 1 or 2, **characterized in that** a surface (27) of the first, non-displaceable sealing seat (16) leading to the first space (17) surrounding the cylindrical projection (12) of the first valve piston (3) is beveled or rounded off in a flow-optimized manner.

4. The device according to any of claims 1 to 3, **characterized in that** the pneumatic control valve (1) comprises the first valve system (10) and a second valve system (29) arranged coaxially to the first valve system (10) as well as axially spaced apart therefrom, which comprises a pneumatic displaceable second valve piston (30) axially sealed by actuation of the first valve piston (3) of the first valve system (10), and that a sealed first pipe (31) guided through the first plate valve (14) of the first valve system (10) protruding with an end face (33) on one end (32) to the region of the annular space (23) formed between the annular sealing seat (13) and the journal (22) of the first valve system (10) is arranged on the second valve system (29), which forms the bleeding passage (18) for the first valve system (10) radially inside.

5. The device according to claim 4, **characterized in that** the end face (33) of the end (32) of the pipe (31) of the second valve piston (30) protruding into the annular space (23) is beveled or rounded off in a flow-optimized manner.

6. The device according to claim 4 or 5, **characterized in that**, analogous to the first valve system (10), the second valve system (29) comprises the second valve piston (30) with an axially protruding, annular sealing seat (36) arranged on its underside (34) on the free end of a cylindrical projection (35) and a second axially displaceable, annular plate valve (37), the annular sealing seat (36) interacts with a radial sealing surface (38) of the second plate valve (37) and this radial sealing surface (38) additionally interacts with a second, coaxially, annular, non-displaceable sealing seat (3) of a greater diameter than the sealing seat (36) on the second valve piston (30), that a second pipe (41) protruding into a central bleeding passage (40) in the second plate valve (37) is arranged on an underside (34) of the second valve piston (30), which together with the first pipe (31) on the second valve piston (30) forms the bleeding passage (18) for the first valve system (10), that an annular space (42) formed between the second pipe (41) and the second annular plate valve (37) forms a bleeding passage for the second valve system (29), which on the free end of the second pipe (41) transitions into a common, tubular bleeding passage (43) for the first and the second valve system (10, 29), and that flow-optimized rounded transitions (44) are formed between the annular sealing seat (36) and the second pipe (41), which cause a flow-optimized conduction of the bleeding air stream (52) through the second valve system (29).

7. The device according to claim 6, **characterized in that** the first pipe (31) and the second pipe (41) are manufactured from the same material and in one piece with the second valve piston (30).

8. Use of the device according to any of claims 1 to 7 in a control valve (1) configured as a braking value transmitter or as a relay valve for a single-circuit or dual-circuit compressed air braking system of a vehicle for adjusting a brake pressure corresponding to a desired braking effect, wherein the control valve (1) comprises at least a first pneumatic valve system (10) according to the preamble of claim 1 and at least the device according to the invention for flow-optimized conduction of a bleeding air stream (52) is arranged in the region of a bleeding passage (18) of the at least first pneumatic valve system (10).

## Revendications

1. Dispositif destiné à augmenter la vitesse de purge d'une valve de régulation (1) pneumatique avec au moins un premier système de valve (10) avec un premier piston de soupape (3) déplaçable axialement qui présente sur son côté inférieur (11) un siège d'étanchéité (13) annulaire, qui s'avance axialement et est agencé à l'extrémité d'un prolongement (12) cylindrique, lequel siège d'étanchéité coopère avec une surface d'étanchéité (15) radiale au niveau d'une première plaque-soupape (14) annulaire et déplaçable radialement, dans lequel la surface d'étanchéité (15) radiale de la première plaque-soupape (14) coopère en outre avec un premier siège d'étanchéité (16) non déplaçable, annulaire, coaxial et d'un diamètre supérieur à celui du siège d'étanchéité (13) au niveau du premier piston de soupape (3), dans lequel, dans la position de repos du premier piston de soupape (3), le siège d'étanchéité (13) au niveau du premier piston de soupape (3) est soulevé depuis la surface d'étanchéité (15) radiale de la première plaque-soupape (14), et la surface d'étanchéité (15) radiale de la première plaque-soupape (14) s'appuie sur le premier siège d'étanchéité (16) non déplaçable de sorte qu'existe une liaison de purge entre un premier espace (17) qui entoure le prolongement (12) cylindrique du piston de soupape (3) avec un passage de purge (18) central dans la première plaque-soupape (14), tandis que lors de l'actionnement du piston de soupape (3), le siège d'étanchéité (13) annulaire de celui-ci s'appuie sur la surface d'étanchéité (15) de la première plaque-soupape (14) et déplace axialement celle-ci de sorte que la surface d'étanchéité (15) de la première plaque-soupape (14) soit soulevée depuis le premier siège d'étanchéité (16) non déplaçable, moyennant quoi une liaison pneumatique existe entre le premier espace (17) qui entoure le prolongement (12) cylindrique du premier piston de soupape (3) et une second espace (19) qui entoure la première plaque-soupape (14), **caractérisé en ce que** coaxialement au siège d'étanchéité (13) annulaire et qui s'avance axialement au niveau du prolongement (12) cylindrique du premier piston de soupape (3) est agencé un téton (22) conique et qui fait saillie dans le passage de purge (18) central de la première plaque-soupape (14), **en ce qu'**un espace annulaire (23) ainsi formé entre le siège d'étanchéité (13) annulaire et le téton (22) présente des passages (24, 25) arrondis et aménagés pour favoriser l'écoulement depuis le siège d'étanchéité (13) annulaire vers l'espace annulaire (23) et depuis l'espace annulaire (23) vers le téton (22) conique, et **en ce que** le téton (22), en raison de son diamètre qui va en se réduisant dans la direction d'écoulement, est conçu de sorte qu'il ne restreigne que peu la section transversale du passage de purge (18) et provoque un guidage favorable à l'écoulement d'un flux d'air de purge (52) guidé dans le passage de purge (18).

2. Dispositif selon la revendication 1, **caractérisé en ce que** dans le téton (22) conique est conçu un perçage de liaison (28), lequel relie le passage de purge (18) avec le côté supérieur (26) du premier piston de soupape (3).

3. Dispositif selon la revendication 1 ou 2, **caractérisé en ce qu'**une surface supérieure (27) du premier siège d'étanchéité (16) non déplaçable, qui mène vers le premier espace (17) qui entoure le prolongement (12) cylindrique du piston de soupape (3), est conçue de façon chanfreinée ou arrondie pour favoriser l'écoulement.

4. Dispositif selon l'une des revendications 1 à 3, **caractérisé en ce que** la valve de régulation (1) pneumatique présente le premier système de valve (10) et un second système de valve (29) agencé coaxialement et espacé axialement par rapport au premier système de valve (10), lequel second système de valve présente un second piston de soupape (30) pneumatique et déplaçable axialement de façon étanche par actionnement du premier piston de soupape (3) du premier système de valve (10), et **en ce qu'**au niveau du second système de valve (29) est agencé un premier conduit (31) étanche, guidé par la première plaque-soupape (14) du premier système de valve (10) et qui fait saillie avec une surface d'extrémité (33) au niveau d'une extrémité (32) jusque dans la région de l'espace annulaire (23) formé entre le siège d'étanchéité (13) annulaire et le téton (22) du premier système de valve (10), lequel conduit forme radialement à l'intérieur le passage de purge (18) pour le premier système de valve (10).

5. Dispositif selon la revendication 4, **caractérisé en ce que** la surface d'extrémité (33) de l'extrémité (32), qui fait saillie dans l'espace annulaire (23), du conduit (31) du second piston de soupape (30) est conçue de façon arrondie ou chanfreinée pour favoriser l'écoulement.

6. Dispositif selon la revendication 4 ou 5, **caractérisé en ce que** le second système de valve (29) présente, de façon analogue au premier système de valve (10), le second piston de soupape (30) avec un siège d'étanchéité (36) annulaire, qui s'avance axialement et est agencé sur son côté inférieur (34) à l'extrémité libre d'un prolongement (35) cylindrique, et une seconde plaque-soupape (37) annulaire et déplaçable axialement, le siège d'étanchéité (36) annulaire coopère avec une surface d'étanchéité (38) de la seconde plaque-soupape (37) et cette surface d'étanchéité (38) radiale coopère en outre avec un second siège d'étanchéité (3) non déplaçable, annulaire, coaxial et d'un diamètre supérieur à celui du siège d'étanchéité (36) au niveau du second piston de soupape (30), **en ce que** sur le côté inférieur (34) du second piston de soupape (30) est agencé un second conduit (41) qui fait saillie dans un passage de purge (40) central dans la seconde plaque-soupape (37), lequel conduit ensemble avec le premier conduit (31) forme au niveau du second piston de soupape (30) le passage de purge (18) pour le premier système de valve (10), **en ce qu'**un espace annulaire (42) formé entre le second conduit (41) et la seconde plaque-soupape (37) annulaire forme un passage de purge pour le second système de valve (29) qui passe au niveau de l'extrémité libre du second conduit (41) dans un passage de purge (43) en forme de conduit et commun au premier et au second système de valve (10, 29), et **en ce qu'**entre le siège d'étanchéité (36) annulaire et le second conduit (41) sont conçus des passages (44) arrondis et aménagés pour favoriser l'écoulement et qui provoquent un guidage favorable à l'écoulement du flux d'air de purge (52) à travers le second système de valve (29).

7. Dispositif selon la revendication 6, **caractérisé en ce que** le premier conduit (31) et le second conduit (41) sont fabriqués dans un même matériau et en une seule pièce avec le second piston de soupape (30).

8. Utilisation du dispositif selon l'une des revendications 1 à 7 dans une valve de régulation (1) conçue en tant que générateur de valeur de freinage ou en tant que valve-relais, pour un système de freinage à air comprimé à circuit unique ou à double circuit d'un véhicule afin de réguler une pression de freinage qui correspond à un effet de freinage souhaité, dans lequel la valve de régulation (1) comprend au moins un premier système de valve (10) pneumatique selon le préambule de la revendication 1 et le dispositif selon l'invention est agencé pour le guidage favorable à l'écoulement d'un flux d'air de purge (52) dans la région d'un passage de purge (18) d'au moins le premier système de valve (10).
